# FASCICULE DE BREVET EUROPEEN

(11) **EP 0 493 170 B1**
(45) Date de publication et mention de la délivrance du brevet: **05.04.1995**
(21) Numéro de dépôt: 91403356.8
(22) Date de dépôt: 11.12.1991
(51) Int. Cl.: H04N 5/33, H04N 3/15

(54) **Détecteur infrarouge à haute capacité d'identification, et caméra thermique comportant un tel détecteur**
Infrarotsensor mit hoher Erkennungsfähigkeit und Wärmebildkamera mit einem solchen Detektor
High recognition ability infrared sensor and thermal camera with such a sensor

(30) Priorité: 20.12.1990 FR 9016001
(43) Date de publication de la demande: 01.07.1992
(73) Titulaire: THOMSON-CSF, 75008 Paris (FR)
(72) Inventeur: Bertrand, Francis, F-92045 Paris la Défense (FR); Beck, Jean-Louis, F-92045 Paris la Défense (FR); Breuzet, Michel, F-92045 Paris la Défense (FR)
(74) Mandataire: Lincot, Georges

(56) Documents cités:
- EP-A- 0 354 067
- WO-A-90/01844
- FR-A- 2 528 981
- PATENT ABSTRACTS OF JAPAN, vol. 9, no. 136 (E-320)[1859], 12 juin 1985; & JP-A-60 18 073 (MITSUBISHI) 30-01-1985

## Description

L'invention se rapporte au domaine de la détection infrarouge pour l'acquisition et la poursuite de cible, et plus particulièrement, elle concerne un détecteur infrarouge à haute capacité d'identification et une caméra thermique comportant un tel détecteur.

L'invention vise à résoudre le problème du repérage de cible en phase d'acquisition (recherche et localisation) et en phase de poursuite ou d'acquisition automatique de cible sur désignation d'objectif, alors que ce repérage est rendu particulièrement délicat :
- en présence de perturbations naturelles (fonds de sol ou de nuages) ou artificielles (contre-mesures, leurres, brouilleurs) qui perturbent le repérage de la cible parmi les différents objets constituant la scène observée ;
- et du fait que le signal de détection présente une dynamique très élevée : par exemple, entre un aéronef en visée de face à 8km et une réflexion solaire spéculaire, un rapport d'énergie lumineuse de l'ordre de 10⁷ peut s'établir ; or une dynamique trop importante se traduit par des saturations dans la chaîne de détection, et en particulier au niveau du détecteur infrarouge lorsqu'est mis en oeuvre un tel détecteur.

Classiquement, le problème du repérage et de la poursuite de cible par un missile, est résolu à l'aide d'un autodirecteur porté par ce missile et comprenant un système optique d'orientation variable de la ligne de visée et un système de formation d'image de la scène observée. Le système de formation d'images comporte un détecteur, pour convertir le signal lumineux en signal électrique, et un ensemble électronique de traitement du signal et de commande du guidage en fonction du signal traité.

Le détecteur infrarouge constitue actuellement l'équipement le plus performant ; un tel détecteur infrarouge est composé de cellules photosensibles associées à un circuit de multiplexage et de lecture rapporté sur la matrice de cellules, l'ensemble étant localisé quasiment dans un même plan du cryostat dit "plan froid". En matériau semi-conducteur, ce détecteur se présente sous la forme d'une simple barrette linéaire ou d'une mosaïque de cellules photosensibles (encore appelées photosites) de dimensions inférieures ou égales à celles d'une tache optique élémentaire. Les charges générées par le rayonnement détecté dans une fenêtre de transmission infrarouge donnée (par exemple dans une bande spectrale utile 3-5 »m ou 8-12 »m) sont intégrées dans une structure de stockage pendant un temps d'intégration donné, avant d'être transmises à un étage de sortie effectuant une conversion charge/tension pour fournir un signal de sortie. Cette mosaïque, respectivement cette barrette, est associée à un système de balayage mécanique, série suivant deux directions ou respectivement parallèle suivant une direction de balayage. Le détecteur peut également se présenter sous la forme d'une matrice fixe utilisée comme une rétine à balayage électronique.

Dans les conditions hostiles évoquées, des techniques de pesée bispectrale, sont mises en oeuvre. Elles consistent à comparer deux signaux provenant de deux barrettes linéaires de cellules photosensibles disposées dans le même cryostat, l'une dans une bande spectrale principale (4 à 5 »m) et l'autre dans une bande dite de levée de doute (2 à 3 »m) ; la comparaison des signaux fournit des informations destinées à distinguer les différents types d'objets observés.

D'autres techniques d'analyse de trajectoire ou de forme permettent soit de suivre les éléments mobiles, par exemple à partir d'une estimation de trajectoire, soit de reconnaître la cible à l'aide de critères préétablis (par exemple géométriques).

Or, ces techniques ne permettent pas de résoudre le problème évoqué dans des conditions satisfaisantes :
- les techniques d'analyse n'offrent pas un pouvoir de reconnaissance suffisamment fiable et reproductible ;
- les techniques bispectrales imposent l'utilisation d'un dispositif de balayage, aussi bien en phase d'acquisition qu'en phase de poursuite ; les performances (sensibilité, résolution) de ces techniques sont alors considérablement limitées par la réduction du temps de passage de la scène devant la barrette du fait de ce balayage. De plus, le dispositif de balayage est encombrant, complexe et délicat (en particulier du fait de la motorisation), d'autant plus que le temps d'acquisition de la vitesse nominale (3000 à 6000 tours/min) doit être le plus court possible pour minimiser le temps de mise en oeuvre du missile.

En outre, les deux types de techniques de l'art antérieur ne résolvent pas le problème de la saturation de la chaîne de détection qui se produit dès que les conditions classiques ne sont plus remplies : par exemple, un leurre pyrotechnique aussi bien qu'un aéronef vu par l'arrière vont donner un signal saturé, le temps d'intégration des charges étant classiquement réglé pour asservir le fond à une valeur de consigne. Une réduction sensible du temps d'intégration des charges des barrettes linéaires permet de distinguer de tels objets en les "dé-saturant" mais interdit alors la distinction, par rapport au fond, d'objets à faible signature, tels qu'un aéronef vu par le secteur avant.

Pour résoudre les problèmes exposés, l'invention propose de combiner les informations provenant de bandeaux à temps d'intégration différents formés à partir d'une matrice de cellules photosensibles dans une première bande spectrale dite principale, et celles d'une barrette linéaire de cellules photosensibles dans une seconde bande spectrale dite de levée de doute. Cette combinaison d'informations permet d'obtenir une confirmation temporelle de la présence d'un objet, d'augmenter la dynamique du signal de sortie et de distinguer les différents objets obtenus par une technique type bispectrale.

Plus précisément, l'objet de l'invention se rapporte à un détecteur infrarouge à haute capacité d'identification pour autodirecteur, disposé dans un cryostat, et caractérisé en ce qu'il comporte :
- une matrice composée de cellules photosensibles dans une bande spectrale infrarouge dite principale, associées à un circuit multiplexeur du type dispositif à transfert de charges (DTC), cette matrice étant organisée en k bandeaux comportant chacun au moins une colonne de cellules photosensibles ;
- une barrette de cellules photosensibles dans une bande spectrale infrarouge dite de levée de doute et associée à un circuit multiplexeur, formant un bandeau parallèle aux bandeaux de la matrice ;
- des moyens de lecture et d'amplification couplés aux sorties de bandeaux pour fournir des signaux utiles ;
- un générateur d'horloges de transfert de charges commandant indépendamment les temps d'intégration des charges dans chacun des bandeaux de la matrice et dans celui de la barrette ;
- et un dispositif de traitement pour comparer, après compensation des écarts temporels, les différents signaux utiles et identifier les types d'objets détectés.

L'invention concerne également une caméra thermique comportant un tel détecteur infrarouge.

L'invention sera mieux comprise et d'autres caractéristiques et avantages apparaîtront à la lecture de la description qui va suivre en référence aux figures annexées qui représentent respectivement :
- la figure 1, l'organisation fonctionnelle schématique du détecteur infrarouge selon l'invention,
- les figures 2a et 2b, des vues en perspective et en coupe partielle montrant la structure d'un mode de réalisation du détecteur selon l'invention,
- la figure 3, la courbe représentant la longueur d'onde de coupure en fonction de la valeur de x du composé CdₓHg₁₋ₓTe utilisé dans un mode de réalisation pour constituer le détecteur.

Le détecteur infrarouge selon l'invention comporte d'une part k bandeaux verticaux formés dans une matrice détectrice et d'autre part un bandeau vertical formé à partir d'une barrette linéaire, respectivement photosensibles dans des bandes spectrales infrarouges différentes, les bandeaux ayant des temps d'intégration de charges indépendants. Ainsi chaque bandeau fournit une information différente du fait des valeurs différentes de certains paramètres de base qui lui sont attachés : temps d'intégration des charges et bande infrarouge sensible. Lorsqu'un tel détecteur est placé derrière un dispositif optomécanique de balayage, la présence à cadence élevée de ces différentes informations relatives à l'analyse d'une même position d'espace fournit alors un outil de repérage de cible à la fois de grande performance (dynamique de signal augmentée par la mise en oeuvre de bandeaux à temps d'intégration des charges différents), de grande fiabilité (conformation temporelle sur les bandeaux) et de grande possibilité de discrimination (réponses dans des bandes spectrales différentes).

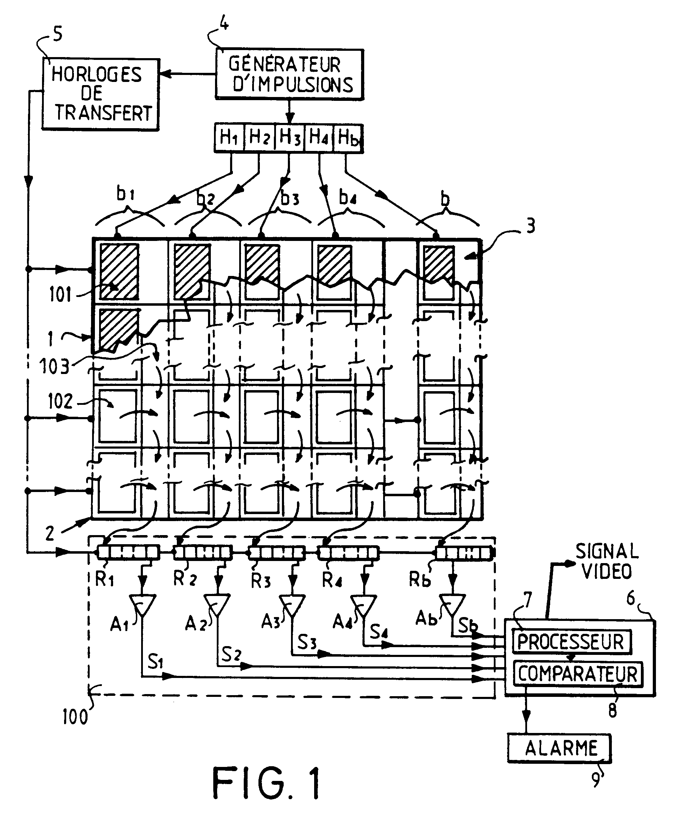

Plus précisément, le schéma fonctionnel d'un exemple simplifié de réalisation du détecteur infrarouge selon l'invention, est illustré à la figure 1. Il comporte une matrice 1 de cellules photosensibles ou photosites, telles que 101, pour la génération d'un nombre de charges proportionnel à l'illumination de chaque cellule dans une bande spectrale donnée, dite bande spectrale principale. Un dispositif à transfert de charges (DTC) 2, organisé en colonnes et disposé sous la matrice 1 (partiellement arrachée sur la figure 1 pour le faire apparaître), est associé à cette matrice pour recevoir et intégrer les charges dans des sites de stockage, tels que 102, associés aux photosites et les transférer (flèches courbes horizontales) de ces sites à des registres à colonne , tels que 103, pour les conduire (flèches courbes verticales) jusqu'à leurs sorties. La matrice 1 est "découpée" sur la figure 1 en 4 bandeaux, respectivement b₁ à b₄, chaque bandeau étant formé, sur cet exemple simplifié, d'une colonne de la matrice de photosite associée à une colonne de sites de stockage et d'un registre à décalage colonne correspondant. Un bandeau supplémentaire pour la levée de doute, formée d'une barrette de cellules 3 photosensibles dans une bande spectrale dite bande de levée de doute, différente de la bande de fréquence principale. Dans le mode de réalisation représenté, cette barrette est associée à une colonne de sites de stockage et à un registre à décalage colonne du même dispositif à transfert de charges 2, pour former un autre bandeau b assurant l'intégration des charges sur des sites de stockage, puis leur transfert, vers le registre à décalage colonne pour leur transfert jusqu'à sa sortie. Les sorties des registres de transfert colonne sont reliées aux entrées de moyens de lecture et d'amplification 100, comportant un registre de lecture associé à chaque bandeau R₁ à R₄ et R_{b} assurant le transfert de charges vers un moyen de conversion charges/tension, chacun de ces registres étant relié à un amplificateur A₁ à A₄, A_{b}, fournissant les signaux utiles S₁ à S₄ et S_{b}.

Les sorties de ces moyens de lecture et d'amplification 100 sont reliées aux entrées d'un dispositif de traitement 6.

Un générateur d'impulsions 4 fournit des horloges de commande H₁ à H₄ et H_{L} qui fixent les temps d'intégration des charges dans les sites de stockage de chacun des bandeaux b₁ à b₄ et b et des horloges 5 de transfert des charges dans les registres à décalage colonne et les registres de lecture horizontaux associés.

Le dispositif de traitement de signal 6 comporte un processeur 7 pour recaler dans le temps, de façon à former un signal vidéo visualisable, les différents signaux numériques S₁ à S₄ et S_{b} provenant respectivement des différents bandeaux formés à partir de la matrice et de la barrette, et un comparateur 8 pour comparer les différents signaux ainsi recalés et éventuellement envoyer un signal de commande à une alarme 9. Le dispositif 6 comprend également les éléments classiques non représentés (échantillonneur, décodeur, filtre, amplificateur) pour fournir d'autre part un signal vidéo. L'ensemble composé du détecteur, des moyens de lecture et d'amplification et du dispositif de traitement forment une caméra thermique.

En fonctionnement, en phase recherche de cible, la ligne de visée suit un mouvement de balayage, la scène analysée étant alors vue successivement par chacun des bandeaux b₁ à b₄ de la matrice 1 puis par le bandeau b pour la levée de doute ; un des bandeaux, par exemple le bandeau b₄, est réglé à l'aide de l'horloge H₄ avec un temps d'intégration de charges très inférieur à celui appliqué aux trois autres bandeaux de la matrice, par exemple au 20ème de celui-ci. Dans ces conditions, chaque objet de la scène provoque l'apparition :
- de signaux dans la bande spectrale principale, chaque signal provenant de chacun des bandeaux b₁ à b₃ à temps d'intégration long ;
- d'un signal dans la bande spectrale principale provenant du bandeau b₄ à temps d'intégration court ;
- d'un signal dans la bande spectrale de levée de doute provenant du bandeau b.

De tels signaux sont analysés dans le dispositif de traitement 6, afin de signaler la présence de différents types d'objets dans une gamme de températures très large. Ainsi :
- la présence de signaux issus de tous les bandeaux à temps d'intégration long des charges signale et confirme la présence d'un objet donné ; en revanche, la présence de signaux issus seulement d'un sous-ensemble de ces bandeaux à temps d'intégration long indique la présence d'une source fluctuante qui peut être une crête de bruit ou une contre-mesure ;
- la présence d'un signal issu du bandeau correspondant à un temps d'intégration court des charges, en plus de signaux issus des autres bandeaux, confirme la présence d'un objet, particulièrement chaud ; son absence indique que l'objet signalé par les signaux issus des autres bandeaux est bien moins chaud ;
- la présence ou l'absence d'un signal dans la bande de levée de doute, issu du bandeau b, combinée aux informations données à partir des signaux issus des autres bandeaux, permet de distinguer entre la présence d'un aéronef (signal faible) et un fond de sol ou un leur pyrotechnique (signal élevé).

En phase de poursuite automatique ou de désignation d'objectif par recopie de conduite de tir de l'avion tireur, la ligne de visée est asservie en direction de la cible ; la matrice 1 couvre alors elle-même le champ instantané d'observation de l'autodirecteur et il n'est donc pas nécessaire de défléchir mécaniquement la ligne de visée : pour optimiser les performances de l'autodirecteur, les 4 bandeaux b1 à b4 fonctionnant en mode sans balayage ("staring" selon la terminologie anglosaxonne) sont réglés au même temps d'intégration. Une image de haute qualité, à haute cadence, est ainsi obtenue.

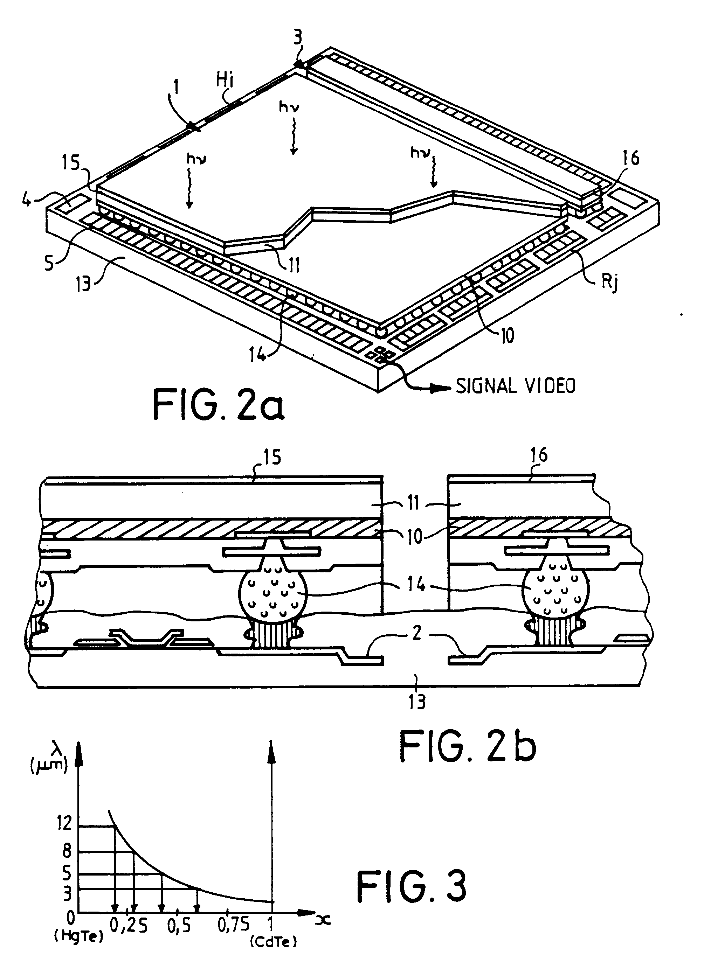

La structure d'un exemple de réalisation du détecteur infrarouge selon l'invention est illustrée aux figures 2a et 2b. La matrice 1 et la barrette 3 sont toutes deux constituées en un matériau semi-conducteur 10, correspondant à l'un des composés ternaires Cdₓ H_{g1-x} Te (0<x<1), déposée sur un substrat 11 de Cd Te ; la matrice 1 et la barrette 3 sont interconnectées aux circuits du dispositif à transfert de charges, 2, formés dans un substrat de silicium 13, par l'intermédiaire de billes d'indium 14 grâce au procédé connu d'hybridation collective. Le générateur d'impulsions 4, les horloges de transfert 5, celles de commande de temps d'intégration, telles que Hᵢ, et les registres de lecture, tels que Rⱼ, sont formés sur le substrat de silicium 13.

Pour réaliser les circuits de transfert de charge du dispositif à transfert de charges DTC, la technologie M.O.S. (Semi-conducteur Métal-Oxyde) bien connue, est mise en oeuvre car, bien adaptée aux transferts de charges, elle peut fonctionner à 77° (température du cryostat) .

Chaque composé Cdₓ Hg₁₋ₓ Te est sensible dans une bande spectrale infrarouge pouvant s'étendre de 3 à 12 »m suivant la valeur de x ; ainsi, à chaque valeur de x comprise entre environ 0, 6 et 0, 2 correspond une valeur de la longueur d'onde de coupure λ_{c} entre 3 et 12 »m selon la courbe représentée sur la figure 3.

Afin d'obtenir deux bandes de sensibilité spectrale bien différentes, l'une pour la matrice et l'autre pour la barrette de levée de doute, deux filtres 15 et 16 sont disposés respectivement sur la matrice et sur la barrette et limitent les bandes spectrales utiles.

Dans un premier mode de réalisation, la composition de CdₓHg₁₋ₓTe est la même pour la matrice et la barrette avec une valeur de x correspondant à une coupure haute de longueur d'onde à 5»m ; dans ce cas le filtre spectral 15 déposé sur la matrice est déterminée à partir de la figure 3) un filtre passe-haut à 4»m, et le filtre 16 déposé sur la barrette est un filtre passe-bande correspondant à la bande de levée de doute choisie (par exemple 3 à 4»m).

Dans un autre mode de réalisation, la composition CdₓHg₁₋ₓTe n'est pas la même pour la matrice et la barrette, les valeurs de x (déterminées à partir de la figure 3) correspondant respectivement à une longueur d'onde de coupure égale à 5 et 4 »m ; dans ce cas, les filtres 15 et 16 sont des filtres passe-haut de longueur d'onde de coupure respectivement égale à 4 et 3 »m .

Dans la réalisation pratique, la matrice détectrice peut être constituée par exemple de 64x64 ou de 128x128 photosites et séparée en 4 bandeaux de 16 ou 32 colonnes de photosites et la barrette peut comprendre 2 ou 4 colonnes de photosites, chaque colonne de photosites étant associée à une colonne de sites de stockage et à un registre à décalage colonne correspondants.

L'invention n'est pas limitée aux moyens tels que décrits et représentés, en particulier :
- la matrice peut être séparée en un nombre k de bandeaux variables (b₁ à bₖ), et les répartitions possibles entre le nombre de bandeaux à temps d'intégration long et à temps d'intégration court ainsi que le nombre de rangées de photosites par bandeau peuvent être déterminés pour pouvoir s'adapter aux conditions d'utilisation ;
- les dispositifs à transfert de charges qui peuvent être mis en oeuvre dans le cadre de l'invention peuvent être de tout type adapté : dispositifs de transfert du type interligne, dispositif à transfert de trames, etc ...
- d'autres compositions de CdₓHg₁₋ₓTe associées à des filtres adaptés peuvent également être utilisées pour que les fenêtres d'exploration se situent dans les bandes 3-4 et 8-12 »m pour, respectivement, la barrette et la matrice.

## Revendications

1. Détecteur infrarouge à haute capacité d'identification pour autodirecteur, disposé dans un cryostat, et caractérisé en ce qu'il comporte :
- une matrice (1) composée de cellules photosensibles dans une bande spectrale infrarouge dite principale et associées à un circuit multiplexeur du type dispositif à transfert de charges (2), l'ensemble étant organisé en k bandeaux comportant chacun au moins une colonne de cellules photosensibles (b₁ à bₖ) ;
- une barrette (3) de cellules photosensibles dans une bande spectrale infrarouge dite de levée de doute et associée à un circuit multiplexeur, formant un bandeau (b) parallèle aux bandeaux (b₁ à bₖ) de la matrice ;
- un générateur d'horloges (4) de transfert de charges commandant indépendamment les temps d'intégration des charges dans chacun des bandeaux (b₁ à bₖ, b) ;
- des moyens de lecture et d'amplification (100) couplés aux sorties des bandeaux (b₁ à bₖ, b) pour fournir des signaux utiles S₁ à Sₖ, S_{b} ;
- et un dispositif de traitement (6) pour comparer, après compensation des écarts temporels, les différents signaux utiles et identifier les types d'objets détectés.

2. Détecteur infrarouge selon la revendication 1, caractérisé en ce que chaque colonne de cellules photosensibles est associée à une colonne de sites de stockage (102) et un registre à décalage vertical (103) des charges, en ce que l'ensemble des colonnes de sites de stockage et des registres à décalage vertical forment le circuit multiplexeur (2), et en ce que le circuit multiplexeur associé à la matrice (1) et celui associé à la barrette (3) sont intégrés dans un même substrat (13).

3. Détecteur infrarouge selon la revendication 1, caractérisé en ce que, en phase recherche, au moins un des bandeaux (b₄) formé à partir de la matrice (1) est réglé sur un temps d'intégration de charges court à l'aide de l'horloge de commande correspondante, les autres bandeaux (b₁ à b₃) étant réglés sur un temps d'intégration long, et en ce qu'en phase poursuite de cible tous les bandeaux formés à partir de la matrice sont réglés sur un même temps d'intégration.

4. Détecteur infrarouge selon la revendication 1 caractérisé en ce que les cellules photosensibles de la matrice et la barrette sont constituées en un matériau ternaire semi-conducteur CdₓHg₁₋ₓTe, les proportions entre les constituants Cd/Hg/Te du matériau des zones sensibles de la matrice (1) et de la barrette (3) étant identiques pour obtenir une même longueur d'onde de coupure haute de la bande de longueur d'onde transmise, un filtre spectral passe-haut (15) étant déposé sur la matrice (1) et un filtre passe-bande (16) sur la barrette (3).

5. Détecteur selon la revendication 4, caractérisé en ce que les proportions Cd/Hg/Te des constituants du matériau formant les cellules photosensibles de la matrice (1) et de la barrette (3) sont différentes pour obtenir deux longueurs d'onde de coupure hautes différentes de la bande de longueur d'onde respectivement transmise, les filtres spectraux (15, 16) déposés sur la matrice (1) et la barrette (3) étant deux filtres passe-haut.

6. Caméra thermique comportant un détecteur infrarouge, des moyens de lecture d'amplification et de traitement des signaux fournis par le détecteur pour délivrer un signal vidéo, caractérisée en ce que le détecteur infrarouge est le détecteur selon l'une des revendications précédentes.

## Patentansprüche

1. Infrarotdetektor mit hoher Erkennungsfähigkeit für Zielsuchkopf, der in einem Kryostat angeordnet ist, dadurch gekennzeichnet, daß er enthält:
- eine Matrix (1), bestehend aus in einem sogenannten Haupt-Infrarotspektralband lichtempfindlichen Zellen, die einer Multiplexerschaltung vom Typ einer Ladungsübertragungsschaltung (2) zugeordnet sind, wobei die Gesamtheit in k Bändern organisiert ist, von denen jedes wenigstens eine Spalte von lichtempfindlichen Zellen (b₁ bis bₖ) enthält;
- eine Leiste (3) von in einem sogenannten Unbestimmtheitsbehebungs-Infrarotspektralband lichtempfindlichen Zellen, die einer Multiplexerschaltung zugeordnet sind, wobei die Leiste ein zu den Bändern der Matrix paralleles Band bildet;
- einen Generator (4) für Ladungsübertragungs-Taktsignale, die unabhängig die Integrationszeiten der Ladungen in jedem der Bänder (b₁ bis bₖ, b) steuern;
- Lese- und Verstärkungsmittel (100), die mit den Ausgängen der Bänder (b₁ bis bₖ, b) verbunden sind, um Nutzsignale S₁ bis Sₖ, S_{b} zu liefern;
- und eine Verarbeitungsanordnung (6), die nach Kompensation der Zeitabstände die verschiedenen Nutzsignale vergleicht und die erfaßten Objekttypen identifiziert.

2. Infrarotdetektor nach Anspruch 1, dadurch gekennzeichnet, daß jede Spalte von lichtempfindlichen Zellen einer Spalte von Speicherplätzen (102) und einem Register (103) zur vertikalen Verschiebung der Ladungen zugeordnet ist, daß die Gesamtheit der Speicherplatzspalten und der Vertikalverschieberegister die Multiplexerschaltung (2) bildet, und daß die der Matrix (1) zugeordnete Multiplexerschaltung und die der Leiste (3) zugeordnete Multiplexerschaltung in einem gemeinsamen Substrat (13) integriert sind.

3. Infrarotdetektor nach Anspruch 1, dadurch gekennzeichnet, daß in der Suchphase wenigstens eines der aufgrund der Matrix (1) gebildeten Bänder (b₄) mit Hilfe des entsprechenden Steuertaktsignals auf eine kurze Ladungsintegrationszeit eingestellt ist, daß die anderen Bänder (b₁ bis b₃) auf eine lange Integrationszeit eingestellt sind, und daß in der Zielverfolgungsphase alle aufgrund der Matrix gebildeten Bänder auf die gleiche Integrationszeit eingestellt sind.

4. Infrarotdetektor nach Anspruch 1, dadurch gekennzeichnet, daß die lichtempfindlichen Zellen der Matrix und der Leiste aus einem ternären Halbleitermaterial CdₓH_{g1-x}Te gebildet sind, daß die Proportionen zwischen den Bestandteilen Cd/Hg/Te des Materials der empfindlichen Zonen der Matrix (1) und der Leiste (3) gleich sind, damit die gleiche obere Grenzwellenlänge des übertragenen Wellenlängenbandes erhalten wird, und daß ein Hochpaß-Spektralfilter (15) auf der Matrix (1) und ein Bandpaßfilter (16) auf der Leiste (3) angeordnet sind.

5. Detektor nach Anspruch 4, dadurch gekennzeichnet, daß die Proportionen Cd/Hg/Te der Bestandteile des die lichtempfindlichen Zellen der Matrix (1) und der Leiste (3) bildenden Materials verschieden sind, damit zwei verschiedene obere Grenzwellenlängen des jeweils übertragenen Wellenlängenbandes erhalten werden, wobei die auf die Matrix (1) und auf die Leiste (3) aufgebrachten Spektralfilter (15, 16) zwei Hochpaßfilter sind.

6. Wärmebildkamera, die einen Infrarotdetektor, Lesemittel, Verstärkermittel und Mittel zur Verarbeitung der von dem Detektor gelieferten Signale zur Abgabe eines Videosignals enthält, dadurch gekennzeichnet, daß der Infrarotdetektor ein Detektor nach einem der vorhergehenden Ansprüche ist.

## Claims

1. Infrared detector with high identification capability for a homing head, arranged in a cryostat, and characterized in that it includes:
- a matrix (1) composed of cells which are photosensitive in a so-called principal infrared spectral band and are associated with a multiplexer circuit of the charge-transfer-device type (2), the assembly being organized as k files each including at least one column of photosensitive cells (b₁ to bₖ);
- a strip (3) of cells which are photosensitive in a so-called confirmatory infrared spectral band and which is associated with a multiplexer circuit, forming a file (b) parallel to the files (b₁ to bₖ) of the matrix;
- a charge-transfer clock generator (4) independently controlling the charge-integration times in each of the files (b₁ to bₖ, b);
- reading and amplification means (100) coupled to the output of the files (b₁ to bₖ, b) so as to provide useful signals S₁ to Sₖ, S_{b};
- and a processing device (6) for comparing, after compensating for the time discrepancies, the various useful signals and identifying the types of objects detected.

2. Infrared detector according to Claim 1, characterized in that each column of photosensitive cells is associated with a column of storage sites (102) and a vertical-charge-shift register (103), in that the assembly of the columns of storage sites and of the vertical-shift registers forms the multiplexer circuit (2), and in that the multiplexer circuit associated with the matrix (1) and the one associated with the strip (3) are integrated in the same substrate (13).

3. Infrared detector according to Claim 1, characterized in that, in the search phase, at least one of the files (b₄) formed from the matrix (1) is set to a short charge-integration time with the aid of the corresponding control clock, the other files (b₁ to b₃) being set to a long integration time, and in that, in the target-tracking phase, all the files formed from the matrix are set to the same integration time.

4. Infrared detector according to Claim 1, characterized in that the photosensitive cells of the matrix and the strip are made from a ternary semiconductor material CdₓH_{g1-x}Te, the proportions between the constituents Cd/Hg/Te of the material of the sensitive areas of the matrix (1) and of the strip (3) being identical so as to obtain the same top cutoff wavelength of the wavelength band transmitted, a high-pass spectral filter (15) being arranged on the matrix (1) and a band-pass filter (16) on the strip (3).

5. Infrared detector according to Claim 4, characterized in that the proportions Cd/Hg/Te of the constituents of the material forming the photosensitive cells of the matrix (1) and of the strip (3) are different so as to obtain two different top cutoff wavelengths of the wavelength band respectively transmitted, the spectral filters (15, 16) arranged on the matrix (1) and the strips (3) being two high-pass filters.

6. Thermal camera including an infrared detector, means for reading amplifying and processing the signals provided by the detector so as to deliver a video signal, characterized in that the infrared detector is the detector according to one of the preceding claims.
